# EUROPÄISCHE PATENTSCHRIFT

(11) **EP 2 803 143 B1**
(45) Veröffentlichungstag und Bekanntmachung des Hinweises auf die Patenterteilung: **05.08.2020**
(21) Anmeldenummer: 13700675.5
(22) Anmeldetag: 11.01.2013
(51) Int. Cl.: H04B 5/00, H04L 12/10

(54) **INDUKTIVE ENERGIEVERSORGUNGSEINRICHTUNG**
INDUCTIVE ENERGY SUPPLY UNIT
DISPOSITIF D'ALIMENTATION EN ÉNERGIE INDUCTIVE

(30) Priorität: 12.01.2012 DE 102012000408
(43) Veröffentlichungstag der Anmeldung: 19.11.2014
(73) Patentinhaber: Phoenix Contact GmbH & Co. KG, 32825 Blomberg (DE)
(72) Erfinder: SCHOLZ, Peter, 32683 Barntrup (DE)
(74) Vertreter: Blumbach · Zinngrebe Patentanwälte PartG mbB
(86) Internationale Anmeldenummer: PCT/EP2013/050494
(87) Internationale Veröffentlichungsnummer: WO 2013/104759

(56) Entgegenhaltungen:
- EP-A1- 1 885 085
- EP-A2- 2 073 315
- EP-B1- 2 067 148
- US-A1- 2008 179 963

## Beschreibung

Die Erfindung bezieht sich auf eine Vorrichtung zur elektrischen Energieversorgung und/oder Datenversorgung eines oder mehrerer Elektronikmodule.

Zur galvanisch getrennten Stromversorgung werden häufig Transformatoren oder Energieübertrager mit Primärspule und Sekundärspule verwendet, die eine Trennstrecke bilden. Bei EP 1 885 085 A1 gibt es, getrennt voneinander, eine Energieübertragungsschnittstelle und eine Datenübertragungsschnittstelle zur berührungslosen Ankopplung eines Busteilnehmers. Zwei Sekundärwicklungen und zwei Verarbeitungseinheiten pro Busteilnehmer sind nicht vorgesehen.

Es sind auch Schnittstellen bekannt, über welche, neben Energie, auch Signale oder Daten bidirektional übertragen werden können. Bei WO 98/15069 A1 wird ein ferromagnetischer Kernschenkel, bestückt mit einer Primärspule für Energieübertragung und mit einer Primärspule für Datenübertragung, in Zusammenwirken mit einem ferromagnetischen Kernschenkel, bestückt mit einer Sekundärspule zur Energieaufnahme und einer Sekundärspule für Datenaufnahme verwendet. Während es zwischen der Primärseite und der Sekundärseite eine Potentialtrennung mit guter elektrischer Isolation gibt, existiert eine solche Potentialtrennung mit guter elektrischer Isolation nicht zwischen der Energieseite und der Datenseite. Wegen der ferromagnetischer Kernschenkel ist eine relativ freie Positionierbarkeit zwischen Primärseite und Sekundärseite nicht möglich.

Mit WO 2010/125048 A1 ist ein System zur berührungsloser Daten- und Energieversorgung von einer Montagebasis aus zu Busteilnehmermodulen bekannt, wobei eine Versorgungsschiene mit Energie-Übertragungsschnittstelle und DatenÜbertragungsschnittstelle vorgesehen ist und die Busteilnehmermodule jeweils eine korrespondierende Energie-Übertragungsschnittstelle und eine korrespondierende DatenÜbertragungsschnittstelle aufweisen. Im Falle der induktiven Energie- und Datenübertragung umfasst die Schnittstelle eine Primärspule mit einer Spulenachse senkrecht zur Versorgungsschiene und pro Busteilnehmermodul jeweils eine sekundärseitige Spule mit einer Spulenachse ebenfalls senkrecht zur Versorgungsschiene.

In WO 2008/118178 A1 wird die drahtlose Energieübertragung mit Hilfe von resonanten Feldern über eine gewisse Distanz hinweg betrieben. Damit ergibt sich eine Potentialtrennung zwischen einer elektrischen Energieversorgungseinheit und einer Energieverbrauchereinheit, jedoch keine Trennung zwischen drei Potentialgruppen.

Aus US 2008/179963 A1 ist ein Spulen-Transducer mit einem planaren elektrisch isolierenden Substrat mit gegenüberliegender Ober- und Unterseite bekannt, wobei auf der Oberseite eine erste Spule und auf der Unterseite eine zweite Spule angeordnet sind, und wobei die erste und zweite Spule dazu angeordnet sind, Energie und/oder Daten von der ersten Spule zu der zweiten Spule durch das Substrat zu übertragen.

Mit EP 2 067 148 B1 ist ein Ladegerät für eine Vielzahl von elektronischen Vorrichtungen bekannt, wobei die Primärwicklung eine Vielzahl von sich überlappenden Spulenelementen an einer Kontaktfläche umfasst und die Sekundärwicklungen bei Positionierung auf der Kontaktfläche elektromagnetische Energie empfangen. Die Primärwicklung ist als Teil eines Schwingkreises angeordnet und enthält einen Kondensator, um die Resonanzfrequenz des Schwingkreises der Arbeitsfrequenz anzupassen. Die aufzuladenden elektronischen Vorrichtungen weisen keine Signal-Daten-Koppelstrecke zwischen benachbarten elektronischen Vorrichtungen auf.

Der Erfindung liegt die Aufgabe zugrunde, eine Vorrichtung zur kontaktlosen elektrischen Energieversorgung und/oder Datenversorgung eines Elektronikmoduls bereitzustellen, wobei das Elektronikmodul erhöhten Sicherheitsanforderungen genügen soll.

Gemäß Erfindung werden mit einem Energieversorgungsteil, über den auch Datensignale laufen können, zwei Energieempfangsteile versorgt, die galvanisch voneinander und zum Energieversorgungsteil getrennt sind. Den Energieempfangsteilen sind jeweils Elektroniken mit eigenen Signalklemmen zugeordnet, so dass das gebildete Elektronikmodul von allen Anschlüssen her erhöhten Sicherheitsanforderungen wegen elektrischen Überschlags genügt.

Bei einer bevorzugten Ausführungsform sind eine Sendespule zur Erzeugung eines magnetischen Wechselfeldes, eine erste Empfangsspule in induktiver Kopplung zu der Sendespule, wenigstens eine zweite Empfangsspule in induktiver Kopplung zu der Sendespule, eine Sendekapazität zur Bildung einer Sende-Resonanzschaltung mit der Sendespule, eine erste Empfangskapazität zur Bildung einer ersten Empfangs-Resonanzschaltung mit der ersten Empfangsspule, eine zweite Empfangskapazität zur Bildung einer zweiten Empfangs-Resonanzschaltung mit der zweiten Empfangsspule, eine als Last an die erste Empfangsspule angeschlossene erste Elektronik und eine als Last an die zweite Empfangsspule angeschlossene zweite Elektronik vorgesehen, wobei die erste Empfangs-Resonanzschaltung mit erster Elektronik und die zweite Empfangs-Resonanzschaltung mit zweiter Elektronik durch einen isolierenden Trennbereich potentialmäßig voneinander getrennt angeordnet sind. Die erste Resonanzschaltung mit erster Elektronik und die wenigstens zweite Resonanzschaltung mit zweiter Elektronik bilden das Elektronikmodul, bei dem zwischen erster und wenigstens zweiter Empfangs-Resonatorschaltung ein isolierender Trennbereich vorgesehen ist, der durch eine Datensignal- Koppelstrecke überbrückbar ist. Es werden eine Mehrzahl von Elektronikmodulen nebeneinander mit einer Anzahl von Sendespulen energetisch versorgt.

Die Ausprägung der galvanischen Trennung zwischen Sendespule und zugehörigem Elektronikmodul sowie innerhalb des Elektronikmoduls bestimmt die Isolationsklasse, für die die Übertragungsvorrichtungen zwischen den voneinander getrennten Potentialgruppen ausgelegt werden müssen. Bei dem Konzept, mit dem die erfindungsgemäße Vorrichtung hergestellt wird, können relativ große Abstände zwischen Sendespule und Empfangsspule sowie zwischen von zueinander galvanisch zu trennenden Empfangsspulen vorgesehen sein, so dass eine hohe Isolationsklasse realisiert werden kann. Das Konzept ermöglicht auch, die Versorgungsklemmen des Sendemoduls an Seiten der Vorrichtung vorzusehen, die fernab von den Signalanschlüssen des Elektronikmoduls liegen, und bei den Signalanschlüssen die Eingangsklemmen von den Ausgangsklemmen an gegenüberliegenden Seiten des Moduls anzubringen.

Bei einer bevorzugten Ausführungsform der Erfindung ist die erste Empfangs-Resonanzschaltung mit erster Elektronik und die wenigstens zweite Empfangs-Resonanzschaltung mit zweiter Elektronik auf einer gemeinsamen Schaltungsplatte untergebracht. Dies ermöglicht den Bau von schmalen Geräten relativ zu der Sendespule, die sich entlang einer länglichen Halteeinrichtung, zum Beispiel einer Tragschiene, erstrecken kann. Auf diese Weise sind eine Mehrzahl von Elektronikmodulen nebeneinander positionierbar, um von der Halteeinrichtung fixiert zu werden.

Wenn die erste Elektronik Signaleingangsanschlüsse und die zweite Elektronik Signalausgangsanschlüsse aufweist, ist es vorteilhaft, die erste und zweite Elektronik auf einer gemeinsamen Schaltungsplatte unterzubringen und die erste Elektronik mit der zweiten Elektronik über eine Datensignal-Koppelstrecke zu verbinden. Bei dieser Ausführungsform liegen die Signalanschlüsse an gegenüberliegenden Seiten der Elektronik, dass heißt mit den größtmöglichen Isolationsabständen.

Gemäß einer bevorzugten Ausführungsform der Erfindung ist die Sendespule mit schraubenförmigen Windungen und zylindrischem Umriss zur Erzeugung von achsparallelen Feldlinien ausgebildet, zu denen die Empfangsspulen mit ihren Empfangsebenen in Querrichtung angeordnet sind. Eine Spule mit schraubenförmigen Windungen erzeugt bekanntlich magnetische Feldlinien, die sich innerhalb der Spule parallel zur Spulenachse erstrecken, außerhalb der Spule ausbiegen und umkehren und einen parallelen oder nahezu parallelen Verlauf zur Spulenachse nehmen, um dann wiederum zum Spuleninneren einzubiegen. Die Empfangsspulen spannen Ebenen auf, auf denen achsparallele Feldlinien senkrecht, oder nahezu senkrecht, stehen, so dass es zu einer effektiven Kopplung zwischen Sendespulen und Empfangsspulen kommt. Wenn die Empfangsspulen auf einer Schaltungsplatte untergebracht sind, ist es zweckmäßig, die Windungen der Empfangsspule spiralförmig verlaufen zu lassen. Solche Spulen können wirtschaftlich hergestellt werden und haben einen großen Einfangquerschnitt für Feldlinien.

In industriellen Anlagen werden häufig eine große Anzahl von Elektronikmodulen benötigt, die man oft in Schaltschränken entlang einer Halteeinrichtung fixiert. Für einen solchen Anwendungsfall werden bei der Erfindung eine Anzahl von Sendespulen entlang der Halteeinrichtung angeordnet, und eine Mehrzahl von Elektronikmodulen, die mit wenigstens zwei Empfangsspulen ausgerüstet sind, können in einer Reihe entlang der Halteeinrichtung relativ frei positioniert und an dieser befestigt werden. Auf diese Weise ist es möglich, einer Mehrzahl von Elektronikmodulen, auch mit jeweils unterschiedlichen Breitenabmessungen eine elektrische Energieversorgung darzubieten, wobei ein hohes Maß der Isolierung durch galvanische Trennung von Stromversorgung und Signalverarbeitung beziehungsweise Datenverarbeitung gegeben ist und zusätzlich die Signal- oder Datenverarbeitung eine hohe Isolationsklasse erreichen kann.

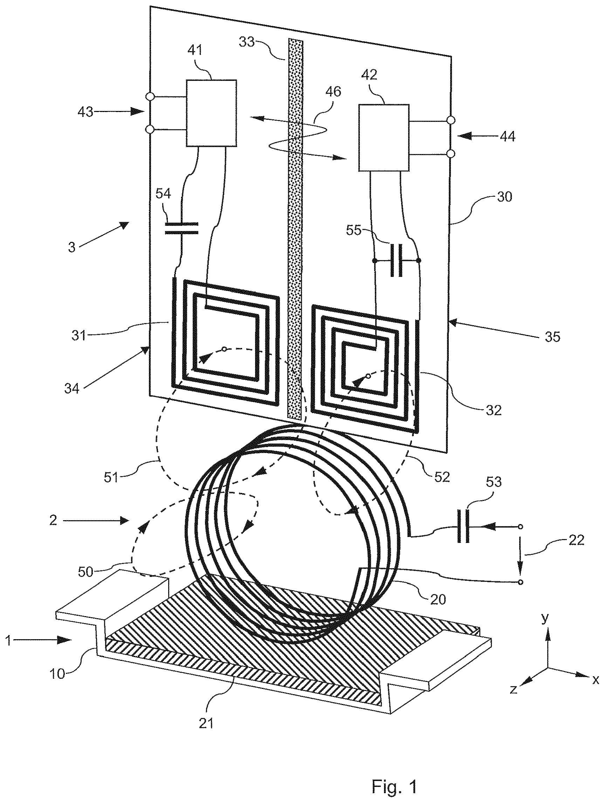

Zwei Ausführungsbeispiele der Erfindung werden anhand der Zeichnung beschrieben. Dabei zeigt
Fig. 1 eine schematische Darstellung eines Elektronikmoduls mit Energieversorgung und Signal- oder Datenverarbeitung, sowie
Fig. 2 die Ankopplung des Elektronikmoduls an eine Halteeinrichtung.

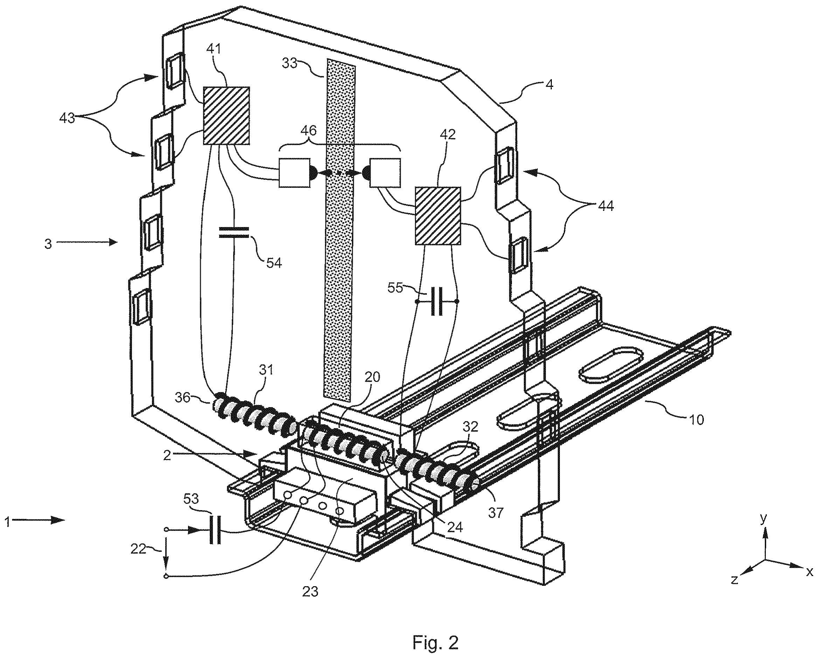

Auf einer Tragschiene 10 einer länglichen Modul-Halteeinrichtung 1 ist eine Sendespule 20 befestigt, die über eine alternierende Eingangsspannung 22 versorgt wird und somit als Energieversorgungsteil 2 fungiert. In einem gewissen Abstand zu der Sendespule 20 wird eine Schaltungsplatte 30 mittels eines Gehäuses 4 (Fig. 2) gehalten, das sich an der Schiene 10 abstützt. Auf der Schaltungsplatte 30 sind als Leiterbahnen in Spiralform zwei flache Empfangsspulen 31, 32 angebracht, die durch einen isolierenden Trennbereich 33 voneinander getrennt sind. Die erste Empfangsspule 31 ist mit einer ersten Elektronik 41 und die zweite Empfangsspule 32 mit einer zweiten Elektronik 42 verbunden. Die Bauteile 31, 41, 54 bilden einen ersten Energieempfangsteil 34 und die Bauteile 32, 42, 55 einen zweiten Energieempfangsteil 35 eines Elektronikmoduls 3.

Die erste Elektronik 41 kann eine Signal- oder Dateneingangselektronik sein und die zweite Elektronik 42 kann eine Signal- oder Datenausgangselektronik des Elektronikmoduls 3 darstellen. Die beiden Elektroniken 41, 42 sind über eine Datensignal- Koppelstrecke 46 miteinander verbunden, um Daten oder Signale zwischen den Elektroniken auszutauschen. Die Koppelstrecke 46 kann durch Koppelelemente gebildet werden, die eine optische Signalstrecke darstellen können, es können aber auch andere Übertragungsverfahren mit kapazitiven oder induktiven Koppelelementen verwendet werden. Alternativ dazu kann aber auch die magnetische Kopplung zwischen den Spulen 31 und 32 zur Signal- bzw. Datenübertragung ausgenutzt werden.

Die Sendespule 20 ist schraubenförmig gewunden und weist eine Spulenachse parallel zur Längserstreckung der Tragschiene 10 auf. Die Empfangsspulen 31 und 32 sind spiralförmig gewunden und weisen Spulenachsen auf, die parallel zueinander und zur Sendespulenachse verlaufen.

Wenn die Sendespule 20 über die alternierende Versorgungsspannung 22 erregt wird, stellt sich ein magnetisches Wechselfeld ein, von dem einige Feldlinien 50, 51, 52 skizziert sind. Der durch die Feldlinie 51 dargestellte Feldanteil durchsetzt die flache Empfangsspule 31. Dementsprechend durchsetzt der durch die Feldlinie 52 dargestellte Feldanteil die flache Empfangsspule 32, während die Feldlinie 50 für das Streufeld steht. Mit der Erregung der Spule 20 wirken neben der Induktivität jedoch auch Kapazitätseffekte zwischen den Spulenwindungen, das heißt, bereits die Spule 20 als solche bildet einen elektrischen Schwingkreis mit einer bestimmten Eigenresonanzfrequenz. Diese kann mit einem oder mehreren Kondensatoren auf einen bestimmten Wert getrimmt werden, der beispielsweise mit der Arbeitsfrequenz der Eingangsspannung korrespondieren kann. Die kapazitiven Einflüsse des schwingungsfähigen Systems sind durch die Gesamtkapazität 53 symbolisiert. In der Praxis kann diese Kapazität durch einen Reihenkondensator gebildet werden. Alternativ oder zusätzlich dazu kann auch ein Parallelkondensator verwendet werden. Schließlich ist es auch möglich, die Spule geometrisch so auszubilden, dass die Arbeitsfrequenz der Eingangsspannung 22 mit der Eigenresonanzfrequenz der Spule 20 korrespondiert, so dass kein diskreter Kondensator benötigt wird, d. h. die Gesamtkapazität 53 setzt sich ausschließlich aus den parasitären Kopplungskapazitäten der Spulenwindungen zusammen.

Wenn die Spule 20 erregt wird, werden in Folge der induktiven Kopplung auch die Spulen 31 und 32 erregt. Auch dort gibt es Kapazitätseffekte zwischen den einzelnen Spulenwindungen. Zur Anpassung an eine gemeinsame oder nahezu gemeinsame Resonanzfrequenz zwischen den Schwingkreisen mit den Spulen 20, 31, 32 können die Kapazitätseffekte zwischen den einzelnen Spulenwindungen gezielt ausgenutzt werden oder es werden auch hier Kondensatoren in Reihenschaltung oder Parallelschaltung oder in Kombination dieser beiden Schaltungsarten benutzt, um eine passende Kapazität 54, 55 einzustellen, mit welchen die Empfangsschaltungen in Resonanz betrieben werden können.

Um schädliche Auswirkungen der Streuinduktivität zu begrenzen, können Abschirmmaterialien, beispielsweise aus Ferritmaterial vorgesehen sein. Eine solche Abschirmplatte 21 erstreckt sich zwischen Sendespule 20 und Schiene 10. Auch die Empfangsspulen 31, 32 können gegenüber Nachbarspulen durch Ferritmaterial abgeschirmt werden.

Der isolierende Trennbereich 33 kann dadurch geschaffen werden, dass sich dort isolierendes Material befindet, welches nicht durch Leiterbahnen oder andere elektronische Komponenten durchsetzt wird. Die Elektroniken 41, 42 können auf unterschiedlichen Seiten der Schaltungsplatte 30 angebracht werden, ebenso die Signalklemmen 43 und 44. Das Elektronikmodul 3 ist in dem Gehäuse 4 (Fig. 2) so befestigt, dass die Signalklemmen 43, 44 z. B. für Steckverbinder zugänglich sind.

Das Gehäuse 4 eignet sich dazu, in einer Mehrzahl gleichartiger Gehäuse nebeneinander auf der Halteeinrichtung 1, beispielsweise in Form der Schiene 10, befestigt zu werden und damit eine Mehrzahl von Elektronikmodulen 3 entlang der länglichen Halteeinrichtung 1 nebeneinander aufgereiht gehaltert zu werden. Entlang der Halteeinrichtung 1 erstrecken sich ferner eine Anzahl von Sendespulen 20, die zueinander fluchten und zu denen die Elektronikmodule ausgerichtet werden können. Die Mehrzahl der Elektronikmodule 3 muss nicht mit der Anzahl der Sendespulen 20 übereinstimmen. Einerseits können die Elektronikmodule besonders schmal gebaut werden, andererseits ist es auch möglich, besonders breite Elektronikmodule in der Reihe der Elektronikmodule unterzubringen. Insgesamt kann ein System aus einer elektrischen Energieversorgung und einer Mehrzahl von Elektronikmodulen geschaffen werden, bei der eine erhöhte Isolation zwischen getrennten Potentialgruppen geschaffen wird.

Fig. 2 zeigt ein zweites Ausführungsbeispiel der Vorrichtung zur elektrischen Energieversorgung und Datenversorgung eines Elektronikmoduls 3. Gleichartige Teile zum Ausführungsbeispiel 1 tragen die gleichen Bezugsziffern. Zusätzlich ist ein Gerätegehäuse 4 vorgesehen, um die Einzelteile des Elektronikmoduls 3 zu schützen und in einer definierten Anordnung zur Halteeinrichtung 1 zu haltern.

Das Energieversorgungsteil 2 des Elektronikmoduls 3 weist ein Fußelement 23 auf, das teilweise in das Gehäuse 4 hineinragt und mit der länglichen Halteeinrichtung 1 lösbar verbunden ist. Das Fußelement 23 enthält die Sendespule 20, die zu ihrer Nachbarschaft mittels eines Kunststoffgehäuses gut isoliert gehalten wird. Das Kunststoffgehäuse ist an der Tragschiene 10 durch Aufrasten befestigt. Die Sendespule 20 enthält einen Ferritkern 24, der das magnetische Wechselfeld bündelt und auf die Spulen 31 und 32 richtet. Auch die Spulen 31 und 32 können Ferritkerne enthalten, wie bei 36 und 37 angedeutet. Die Form der Ferritkerne 36, 37 braucht nicht stabförmig sein, es sind auch rückwärtsgebogene Formen möglich, um den magnetischen Widerstand gering zu halten.

In Fig. 2 ist die Koppelstrecke 46 als optische Trennstrecke skizziert. Daten zwischen den beiden Elektroniken 41 und 42 werden somit über den isolierenden Trennbereich 33 übermittelt. Die erhöhten Sicherheitsanforderungen können auch über induktive, kapazitive oder elektromagnetische Übertragungsverfahren bewerkstelligt werden. Für die Signalanschlüsse 43 und 44 sind Aussparungen im Gehäuse 4 vorgesehen, die einen Sicherheitsabstand voneinander halten.

Über die Spulensysteme 20, 31, 32 können auch Datensignale übertragen werden, die den Energiesignalen aufmoduliert sind. Auch hier können die verschiedenen Sicherheitsnormen eingehalten werden.

Der Betrieb des Elektronikmoduls 3 geht wie folgt vor sich: Es wird eine Arbeitsfrequenz der alternierenden Versorgungsspannung in Angleichung an die Resonanzfrequenz der Schwingkreise gewählt. Die alternierende Versorgungsspannung 22 treibt einen Strom durch die Sendespule 20, wodurch ein magnetisches Wechselfeld erzeugt wird, symbolisiert durch die Feldlinien 50, 51, 52. In Folge induktiver Kopplung entstehen in den Empfangsspulen 31 und 32 jeweilige Wechselströme, die bei Resonanz der Spulen den Betrieb der Last mit höherem Wirkungsgrad ermöglichen. In der Praxis besteht die Last typischerweise aus einer Gleichrichterschaltung, einem Glättungskondensator und der daran angeschlossenen Elektronik 41, 42. Die Elektronik kann auf der Schaltungsplatte integriert sein oder extern untergebracht sein. Die Energie der Quelle gelangt somit über die magnetischen Felder in die jeweilige Elektronik 41 oder 42, um dort als Energiequelle für die Signal- oder Datenverarbeitung zur Verfügung zu stehen. Das durch die Feldlinien 50, 51, 52 symbolisierte magnetische Feld beinhaltet außerdem einen Energieanteil, der durch die Kapazität der Sendeschaltung, symbolisiert durch den Kondensator 53, gewissermaßen aufgesammelt bzw. kompensiert wird. Deshalb braucht idealerweise nur soviel elektrische Energie in das System eingespeist werden, wie bei den Elektroniken 41 und 42 entnommen wird. Von der elektrischen Spannungsversorgung 22 aus gesehen erscheint die durch die Elektroniken gebildete Last bei idealer Resonanzbedingung als rein Ohm'sche Last.

Wie bei der Sendespule die Induktivität durch die Kapazität 53 nahezu kompensiert wird, wird bei den Empfangsspulen 31, 32 die Induktivität durch die Kapazitäten 54 und 55 nahezu kompensiert. Dies sind die positiven Effekte der Resonanzschaltungen.

Das dargestellte Ausführungsbeispiel kann in mancherlei Richtung abgewandelt werden. So können die beiden Empfangsspulen auf unterschiedlichen Seiten der Schaltungsplatte angebracht sein, wobei in diesem Fall die Schaltungsplatte als Trennbereich dienen kann.

Weiterhin ist es möglich, die alternierende Eingangsspannung 22 sowohl für die Energieversorgung als auch für Datensignaleingabe zu benutzen. Hierzu kann die Energie über ein Trägersignal und das Datensignal als Modulation übertragen werden. In den Empfangsspulen wird dann das Energiesignal von dem Datensignal getrennt. Somit bildet die Sendespule mit jeweils einer der Empfangsspulen eine Datensignal-Koppelstrecke.

Es kann auch eine Datensignalübertragung von den Empfangsspulen zu der Sendespule erfolgen, und zwar beispielsweise mit dem sogenannten Verfahren der Lastmodulation. In der betreffenden Elektronik wird die Art und Größe der Last geändert, was Rückwirkungen auf die Strom-Spannungsverhältnisse in der Sendespule hat, so dass diese Rückwirkungen als Datensignale auf der Sendeseite detektiert werden können. Bei dieser Datensignal-Koppelstrecke können Hilfsträger eingesetzt werden, um das Energiesignal besser vom Datensignal zu trennen.

Auch ein Datenaustausch zwischen den Empfangsspulen ist möglich, da diese magnetisch miteinander gekoppelt sind. Durch ein geeignetes Hinzufügen einer zusätzlichen Kapazität kann beispielsweise eine zweite Resonanzfrequenz erzeugt werden, die als Träger für Datensignale benutzt wird.

Anstelle von zwei Empfangsspulen können auch mehrere Empfangsspulen um die Sendespule gruppiert werden, um mehrkanalige Systeme zu betreiben. Die Module können in zwei, drei oder vier getrennten Ebenen angeordnet sein und dabei galvanisch voneinander getrennt sein. Die Datensignal-Koppelstrecken zwischen den Elektroniken der verschiedenen Ebenen können optischer, magnetischer oder kapazitiver Natur sein.

## Patentansprüche

1. Vorrichtung zur elektrischen Energieversorgung und/oder Datenversorgung eines Elektronikmoduls (3), umfassend:
- einen in einer länglichen Halteeinrichtung (1) eingebauten Energieversorgungsteil (2) mit einer Sendespule (20) zur Erzeugung eines magnetischen Wechselfeldes,
- einen ersten Energieempfangsteil (34) mit einer ersten Empfangsspule (31) in induktiver Kopplung zu der Sendespule (20) sowie mit einer an die erste Empfangsspule (31) angeschlossenen ersten Elektronik (41), die erste Signalklemmen (43) aufweist,
- einen zweiten Energieempfangsteil (35) mit einer zweiten Empfangsspule (32) in induktiver Kopplung zu der Sendespule (20) sowie mit einer an die zweite Empfangsspule (32) angeschlossenen zweiten Elektronik (42), die zweite Signalklemmen (44) aufweist,
- wobei der erste Energieempfangsteil (34) mit erster Elektronik (41) und der zweite Energieempfangsteil (35) mit zweiter Elektronik (42) auf einer gemeinsamen Schaltungsplatte (30) untergebracht sind sowie Teil des Elektronikmoduls (3) bilden, das in einem Gerätegehäuse (4) untergebracht ist, welches an der Halteeinrichtung (1) befestigbar ist, und
- wobei der erste Energieempfangsteil (34) mit erster Elektronik (41) und der zweite Energieempfangsteil mit der zweiten Elektronik (42) durch einen auf der gemeinsamen Schaltungsplatte gelegenen, isolierenden Trennbereich (33) galvanisch voneinander getrennt angeordnet sind, der durch eine Daten-Kopplungsstrecke (46) überbrückt wird, um Signale oder Daten direkt zwischen der ersten Elektronik (41) und der zweiten Elektronik (42) auszutauschen.

2. Vorrichtung nach Anspruch 1,
wobei das Spulensystem (20, 31, 32) mindestens ein kapazitives Element (53, 54,55) zur Bildung wenigstens einer jeweiligen Resonanzschaltung des Sendesystems mit dem Empfangssystem aufweist.

3. Vorrichtung nach Anspruch 2,
wobei eine Sendekapazität (53) zur Bildung einer Sende-Resonanzschaltung mit der Sendespule (20) vorgesehen ist.

4. Vorrichtung nach Anspruch 2,
wobei eine erste Empfangskapazität (54) zur Bildung einer ersten Empfangs-Resonanzschaltung vorgesehen ist.

5. Vorrichtung nach Anspruch 2,
wobei eine zweite Empfangskapazität (55) zur Bildung einer zweiten Empfangs-Resonanzschaltung vorgesehen ist.

6. Vorrichtung nach einem der Ansprüche 1 bis 5,
wobei die Sendespule (20) auf einer Tragschiene (10) der Halteeinrichtung (1) befestigt ist, und die Schaltungsplatte (30) mittels eines Gehäuses (4) gehalten wird, das sich an der Tragschiene (10) abstützt.

7. Vorrichtung nach einem der Ansprüche 1 bis 6,
wobei die Signalklemmen (43) der ersten Elektronik (41) Signaleingangsanschlüsse und die Signalklemmen (44) der zweiten Elektronik (42) Signalausgangsanschlüsse darstellen.

8. Vorrichtung nach einem der Ansprüche 1 bis 7,
wobei mehrere erste und zweite Empfangsspulen (31, 32) in mehreren Ebenen der Schaltungsplatte (30) angeordnet sind.

9. Vorrichtung nach einem der Ansprüche 1 bis 8,
wobei die Empfangsspulen (31, 32) spiralig gewunden sind.

10. Vorrichtung nach einem der Ansprüche 1 bis 9,
wobei die Datensignal-Koppelstrecke (46) eine optische Signalstrecke darstellt.

11. Vorrichtung nach einem der Ansprüche 1 bis 9,
wobei die Datensignal-Koppelstrecke (46) aus der magnetischen Kopplung zwischen Spulen besteht.

12. Vorrichtung nach einem der Ansprüche 1 bis 7,
wobei die Sendespule (20) mit schraubenförmigen Windungen und zylindrischem Umriss zur Erzeugung eines Feldanteils mit zur Längsstreckung der Halteeinrichtung (1) achsparallelen Feldlinien ausgebildet ist, zu denen die Empfangsspulen (31, 32) mit ihren Empfangsebenen in Querrichtung angeordnet sind.

13. Vorrichtung nach einem der Ansprüche 1 bis 12,
wobei eine Anzahl von Sendespulen (20) entlang der länglichen Halteeinrichtung (1) angeordnet sind, und wobei eine Mehrzahl von Elektronikmodulen (3) in einer Reihe entlang der Halteeinrichtung (1) positionierbar und an der Halteeinrichtung (1) befestigbar sind.

14. Vorrichtung nach einem der Ansprüche 1 bis 13,
wobei der Energieversorgungsteil (2) des Elektronikmodules (3) ein Fußelement (23) aufweist, das in ein Gehäuse (4) des Elekronikmoduls (3) hineinragt und mit der länglichen Halteeinrichtung (1) lösbar verbunden ist sowie die Sendespule (20) bei guter elektrischer Isolation gegenüber dem Elektronikmodul (3) enthält, wobei die Sendespule (20) einen Ferritkern (24) enthält, der in Koppelbeziehung zu Ferritkernen (36, 37) der Empfangsspulen (31, 32) angeordnet ist.

15. Vorrichtung nach Anspruch 14,
wobei das Fußelement (23) ein Kunststoffgehäuse aufweist und mit Rasteinrichtungen zum Aufrasten auf einer Tragschiene (10) der Halteeinrichtung (1) versehen ist sowie zu dem Modulgehäuse (4) eine definierte Anordnung einnimmt.

## Claims

1. A device for supplying electrical energy and/or supplying data to an electronic module (3), comprising:
- an energy supply part (2) that is installed in an elongated holding device (1) and has a transmitting coil (20) for producing an alternating magnetic field,
- a first energy receiving part (34) with a first receiving coil (31) inductively coupled to the transmitting coil (20), and with a first electronics (41) which is connected to the first receiving coil (31) and which has first signal terminals (43),
- a second energy receiving part (35) with a second receiving coil (32) inductively coupled to the transmitting coil (20), and with a second electronics (42) which is connected to the second receiving coil (32) and which has second signal terminals (44),
- wherein the first energy receiving part (34) comprising the first electronics (41) and the second energy receiving part (35) comprising the second electronics (42) are accommodated on a common circuit board (30) and form a portion of the electronic module (3) which is accommodated in an appliance housing (4) which can be secured on the holding device (1), and
- wherein the first energy receiving part (34) comprising the first electronics (41) and the second energy receiving part comprising the second electronics (42) are arranged galvanically separated from one another by an insulating area of separation (33) which is located on the common circuit board and which is bridged by a data coupling line (46) in order to exchange signals or data directly between the first electronics (41) and the second electronics (42).

2. The device according to claim 1, wherein the coil system (20, 31, 32) has at least one capacitive element (53, 54, 55) for forming at least one respective resonance circuit of the transmitting system with the receiving system.

3. The device according to claim 2, wherein a transmitting capacitance (53) for forming a transmit-resonance circuit with the transmitting coil (20) is provided.

4. The device according to claim 2, wherein a first receiving capacitance (54) for forming a first receive-resonance circuit is provided.

5. The device according to claim 2, wherein a second receiving capacitance (55) for forming a second receive-resonance circuit is provided.

6. The device according to any one of the claims 1 to 5, wherein the transmitting coil (20) is secured on a support rail (10) of the holding device (1), and the circuit board (30) is held by means of a housing (4) that is supported on the support rail (10).

7. The device according to any one of the claims 1 to 6, wherein the signal terminals (43) of the first electronics (41) represent signal input connectors and the signal terminals (44) of the second electronics (42) represent signal output connectors.

8. The device according to any one of the claims 1 to 7, wherein a plurality of first and second receiving coils (31, 32) are arranged in a plurality of planes of the circuit board (30).

9. The device according to any one of the claims 1 to 8, wherein the receiving coils (31, 32) are wound in a spirally manner.

10. The device according to any one of the claims 1 to 9, wherein the data signal coupling line (46) represents an optical signal line.

11. The device according to any one of the claims 1 to 9, wherein the data signal coupling line (46) consists of the magnetic coupling between coils.

12. The device according to any one of the claims 1 to 7, wherein the transmitting coil (20) is formed with helical turns and a cylindrical contour for producing a field portion having flux lines which are axially parallel to the longitudinal extent of the holding device (1) and in relation to which the receiving coils (31, 32) with their reception planes are arranged in the transverse direction.

13. The device according to any one of the claims 1 to 12, wherein a number of transmitting coils (20) are arranged along the elongated holding device (1), and wherein a plurality of electronic modules (3) can be positioned in a row along the holding device (1) and can be secured on the holding device (1).

14. The device according to any one of the claims 1 to 13, wherein the energy supply part (2) of the electronic module (3) has a base element (23) which protrudes into a housing (4) of the electronic module (3) and is detachably connected to the elongated holding device (1) and which contains the transmitting coil (20) with good electrical insulation with respect to the electronic module (3), wherein the transmitting coil (20) contains a ferrite core (24) which is arranged in a coupling relation with ferrite cores (36, 37) of the receiving coils (31, 32).

15. The device according to claim 14, wherein the base element (23) has a plastic housing and is provided with latching devices for latching onto a support rail (10) of the holding device (1), and is placed in a defined arrangement with respect to the module housing (4).

## Revendications

1. Dispositif pour électriquement approvisionner en énergie et/ou approvisionner en données un module électronique (3), comprenant :
- une partie d'approvisionnement en énergie (2) intégrée à un équipement de maintien (1) longitudinal avec une bobine d'émission (20) pour produire un champ alternatif magnétique,
- une première partie de réception d'énergie (34) avec une première bobine de réception (31) en couplage inductif avec la bobine d'émission (20) ainsi qu'avec une première électronique (41) raccordée à la première bobine de réception (31) et qui présente des premières bornes de signal (43),
- une seconde partie de réception d'énergie (35) avec une seconde bobine de réception (32) en couplage inductif avec la bobine d'émission (20) ainsi qu'avec une seconde électronique (42) raccordée à la seconde bobine de réception (32) et qui présente des secondes bornes de signal (44),
- dans lequel la première partie de réception d'énergie (34) est logée avec la première électronique (41) et la seconde partie de réception d'énergie (35) est logée avec la seconde électronique (42) sur une plaquette à circuits (30) commune tout en formant toutes deux une partie du module électronique (3) qui est logé dans un logement d'appareil (4), lequel peut être fixé contre l'équipement de maintien (1), et
- dans lequel la première partie de réception d'énergie (34) avec la première électronique (41) et la seconde partie de réception d'énergie avec la seconde électronique (42) sont agencées de façon galvaniquement séparée l'une de l'autre via une zone de séparation (33) isolante posée sur la plaquette à circuits commune, laquelle zone est enjambée par un trajet de couplage de données (46) pour directement échanger des signaux ou des données entre la première électronique (41) et la seconde électronique (42).

2. Dispositif selon la revendication 1,
dans lequel le système de bobine (20, 31, 32) présente au moins un élément capacitif (53, 54, 55) pour former au moins une commutation de résonnance respective du système d'émission avec le système de réception.

3. Dispositif selon la revendication 2,
dans lequel une capacité d'émission (53) est prévue pour former une commutation de résonnance d'émission avec la bobine d'émission (20).

4. Dispositif selon la revendication 2,
dans lequel une première capacité de réception (54) est prévue pour former une première commutation de résonnance de réception.

5. Dispositif selon la revendication 2,
dans lequel une seconde capacité de réception (55) est prévue pour former une seconde commutation de résonnance de réception.

6. Dispositif selon l'une des revendications 1 à 5,
dans lequel la bobine d'émission (20) est fixée sur un rail de support (10) de l'équipement de maintien (1) et la plaquette à circuits (30) est maintenue au moyen d'un logement (4) qui s'appuie contre le rail de support (10).

7. Dispositif selon l'une des revendications 1 à 6,
dans lequel les bornes de signal (43) de la première électronique (41) constituent des raccordements d'entrée de signal et les bornes de signal (44) de la seconde électronique (42) constituent des raccordements de sortie de signal.

8. Dispositif selon l'une des revendications 1 à 7,
dans lequel plusieurs première et seconde bobines de réception (31, 32) sont agencées dans plusieurs plans de la plaquette à circuits (30).

9. Dispositif selon l'une des revendications 1 à 8,
dans lequel les bobines de réception (31, 32) sont spiralées.

10. Dispositif selon l'une des revendications 1 à 9,
dans lequel le trajet de couplage de signaux de données (46) constitue un trajet de signaux optique.

11. Dispositif selon l'une des revendications 1 à 9,
dans lequel le trajet de couplage de signaux de données (46) est composé du couplage magnétique entre les bobines.

12. Dispositif selon l'une des revendications 1 à 7,
dans lequel la bobine d'émission (20) est conçue avec des spires hélicoïdales et un contour cylindrique pour produire une proportion de champ avec des lignes de champ axialement parallèles à l'allongement longitudinal de l'équipement de maintien (1) auxquelles les bobines de réception (31, 32) sont agencées avec leurs plans de réception dans la direction transversale.

13. Dispositif selon l'une des revendications 1 à 12,
dans lequel un certain nombre de bobines d'émission (20) sont agencées le long de l'équipement de maintien (1) longitudinal, et dans lequel une pluralité de modules électroniques (3) peuvent être positionnés dans une rangée le long de l'équipement de maintien (1) et peuvent être fixés contre l'équipement de maintien (1).

14. Dispositif selon l'une des revendications 1 à 13,
dans lequel la partie d'approvisionnement en énergie (2) du module électronique (3) présente un élément de pied (23) qui s'avance dans un logement (4) du module électronique (3) et est relié de façon amovible à l'équipement de maintien (1) longitudinal tout en contenant la bobine d'émission (20) lors d'une bonne isolation électrique par rapport au module électronique (3), où la bobine d'émission (20) contient un noyau de ferrite (24) qui est agencé dans une relation de couplage par rapport aux noyaux de ferrite (36, 37) des bobines de réception (31, 32).

15. Dispositif selon la revendication 14,
dans lequel l'élément de pied (23) présente un logement en plastique et est doté de dispositifs d'encliquetage pour un encliquetage sur un rail de support (10) de l'équipement de maintien (1) tout en adoptant un agencement défini par rapport au logement de module (4).
